# EUROPÄISCHE PATENTSCHRIFT

(11) **EP 0 302 385 B1**
(45) Veröffentlichungstag und Bekanntmachung des Hinweises auf die Patenterteilung: **17.03.1993**
(21) Anmeldenummer: 88112171.9
(22) Anmeldetag: 27.07.1988
(51) Int. Cl.: G01L 25/00

(54) **Kalibrierverfahren für eine Messaufnehmeranordnung zur flächigen Druckmessung und Vorrichtung zur Durchführung des Verfahrens**
Device and process for calibrating force distribution sensors
Dispositif et procédé de calibrage d'un capteur de distribution de force

(30) Priorität: 31.07.1987 DE 3725471
(43) Veröffentlichungstag der Anmeldung: 08.02.1989
(73) Patentinhaber: Seitz, Peter, D-81675 München (DE)
(72) Erfinder: Seitz, Peter, D-81675 München (DE)
(74) Vertreter: Bohnenberger, Johannes, Dr.

(56) Entgegenhaltungen:
- DE-A- 1 473 497
- FR-A- 2 608 760

## Beschreibung

Die Erfindung betrifft ein Verfahren nach dem Oberbegriff des Patentanspruches 1 sowie eine Vorrichtung nach dem Oberbegriff des Anspruches 6.

Aus der DE-PS 25 29 475 und aus der DE-OS 30 11 266 sind Druckmeßaufnehmer für die Messung flächenhafter Druckverteilungen bekannt, also Meßvorrichtungen, bei denen eine Vielzahl von Meßpunkten, die in einer Ebene liegen, erfaßt werden. Den Sensoren sind hierbei Auswerteinrichtungen nachgeschaltet.

Um die bekannten Meßaufnehmeranordnungen zu kalibrieren, hat man bisher jeden Einzelsensor mit einer konstanten Last (Gewicht) belastet und aus dem Differenzergebnis zwischen den Ausgangssignalen mit und ohne Last den Proportionalitätsfaktor, sowie gegebenenfalls die Lage des Nullpunktes des Sensors bestimmt. Dieses Verfahren ist zeitraubend, umständlich und führt trotz sorgfältiger Durchführung zu fehlerhaften Kalibrierungen.

Ausgehend vom oben genannten Stand der Technik ist es Aufgabe der vorliegenden Erfindung, ein Verfahren der eingangs genannten Art dahingehend weiterzubilden, daß auf einfache Weise eine exakte Kalibrierung durchführbar ist.

Diese Aufgabe wird dadurch gelöst, daß man die Ausgangssignale bzw. Ausgangsamplituden aller Sensoren in unbelastetem Zustand mißt und aufzeichnet, die gesamte Meßaufnehmeranordnung mindestens teilweise in ein fluides Medium (Luft, Flüssigkeit) bringt, dessen Druck über dem Atmosphärendruck liegt und die Ausgangssignale der Sensoren sowie den Druck des fluiden Mediums mißt und aufzeichnet, die Proportionalitätsfaktoren und Nullpunkte aller Sensoren aus den Meßdaten bestimmt und in der Auswerteinrichtung speichert, und bei allen folgenden Messungen die Sensorausgangssignale nach Verschiebung um die gemessenen Nullpunktwerte mit dem betreffenden gespeicherten Proportionalitätsfaktor multipliziert. Wenn man das Verfahren in dieser Art durchführt, so gelangt man erstaunlicherweise zu wesentlich exakteren Kalibrierergebnissen, als dies bisher der Fall war. Dies rührt anscheinend insbesondere daher, daß bei der diskreten Kalibrierung aller Einzelsensoren die mechanische (zwangsläufig vorhandende) Kopplung zwischen den Sensoren das Meßergebnis verfälscht. Da andererseits bei aktuellen Messungen die Einzelsensoren zwar ungleichmäßig belastet werden, andererseits aber nebeneinaner liegende Sensoren aufgrund der normalerweise auftretenden "weichen" Übergänge der Kraft oder Druckverteilung mit ähnlichen Werten beaufschlagt sind. Dadurch hat die mechanische Kopplung zwischen den Einzelsensoren bei der aktuellen Messung einen geringeren Einfluß als bei der diskreten Kalibrierung, so daß das erfindungsgemäße Verfahren die Meßaufnehmeranordnung in einer Art und Weise belastet, die der aktuellen Messung wesentlich ähnlicher ist.

Bei einer bevorzugten Ausführungsform des erfindungsgemäßen Verfahrens schließt man die Meßaufnehmeranordnung gegenüber dem fluiden Medium mit einer Schutzhülle ab. Die Schutzhülle verfälscht die vom fluiden Medium auf die Meßaufnehmeranordnung aufgebrachte Kraft praktisch nicht gewährleistet aber, daß man die Zuleitungskabel zur Meßaufnehmeranordnung ohne Abdichtmittel mit der nachgeschalteten Auswerteinrichtung verbinden kann. Besonders einfach wird das Verfahren dann, wenn man die Schutzhülle mit darüber liegendem fluidem Medium auf der einen Seite der Meßaufnehmeranordnung vorsieht und die Meßaufnehmeranordnung auf der anderen Seite ganzflächig abstützt.

Zur Durchführung des Verfahrens eignet sich eine Vorrichtung, die einen Druckraum aufweist, der gegenüber der Atmosphäre dicht abschließbar und mit einer Befüllungsöffnung und einem Druckmeßfühler versehen ist. Die Befüllungsöffnung wird mit einer Pumpe verbunden, die gegebenenfalls auch fest auf dem Druckraum installiert sein kann.

Bei einer bevorzugten Ausführungsform der Erfindung ist der Druckraum auf einer Seite durch eine Membran abgeschlossen und gegenüber einer Grundfläche fixierbar.

Weitere erfindungswesentliche Merkmale ergeben sich aus der nachfolgenden Beschreibung von Ausführungsbeispielen, die anhand von Abbildungen näher erläutert sind. Hierbei zeigen:
- Fig. 1: eine erste bevorzugte Ausführungsform einer Vorrichtung zur Durchführung des Kalibrierverfahrens;
- Fig. 2: eine zweite bevorzugte Ausführungsform der Vorrichtung.
- Fig. 3: eine weitere bevorzugte Ausführungsform der Erfindung in einer Ansicht ähnlich der nach Fig. 2;
- Fig. 4: eine Detailansicht einer bevorzugten Ausführungsform der in Fig. 3 angedeuteten Haltemittel im Längsschnitt; und
- Fig. 5: einen Schnitt entlang der Linie V-V aus Fig. 4.

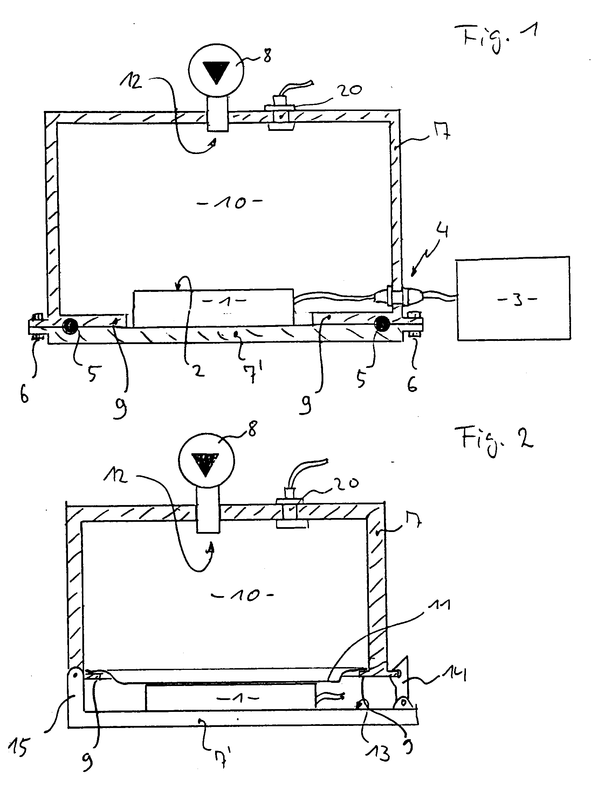

Bei der in Fig. 1 gezeigten Vorrichtung wird ein Druckraum 10 von einer Haube 7 gebildet, die auf einer Bodenfläche 7' sitzt und gegenüber dieser mittels Dichtungen 5 abgedichtet ist. Die Haube 7 und der Boden 7' werden über Spannschrauben 6 zusammengehalten.

In der Haube 7 befindet sich ein Druckmeßfühler 20, der mit einer hier nicht gezeigten Anzeigeanordnung verbunden ist. Weiterhin ist in der Haube 7 ein Einlaßstutzen 12 montiert, der mit einer Pumpe 8 in Verbindung steht. Schließlich ist in der Haube 7 eine gasdichte Steckerverbindung 4 vorgesehen, über die man eine in den Druckraum 10 eingebrachte Meßaufnehmeranordnung 1 mit der dazugehörigen Auswerteinrichtung 3 verbinden kann.

Vorzugsweise geht man beim Kalibrieren derart vor, daß man die Ausgangssignale des Meßaufnehmers 20 direkt der nachgeschalteten Auswerteinrichtung 3 zuführt und die Kalibrierkurven in der Auswerteinrichtung 3 als Digitalwerte speichert, welche bei nachfolgenden akutellen Messungen mit den Meßwerten zu deren Kalibrierung verrechnet werden.

Die Anordnung nach Fig. 2 unterscheidet sich von der nach Fig. 1 insofern, als die Haube 7 mit dem Boden 7' über eine Gelenkverbindung 15 verbunden ist und zum Boden 7' über einen Rasthaken 14 unbeweglich gehalten werden kann. Die Haube 7 weist einen nach innen ragenden Umfangsflansch 9 auf, an dem eine Membran 11 dicht befestigt ist. Will man eine Meßaufnehmeranordnung 1 mit Hilfe dieser Vorrichtung kalibrieren, so legt man die Meßaufnehmeranordnung 1 auf die vom Boden 7' gebildete Gegenfläche 13 und pumpt den Druckraum 10 über die Pumpe 8 auf. Die Membran 1 beaufschlagt dann die Meßaufnehmeranordnung 1 mit einem gleichmäßigen Druck, ohne daß dabei die ganze Meßaufnehmeranordnung 1 in den Druckraum gebracht werden muß.

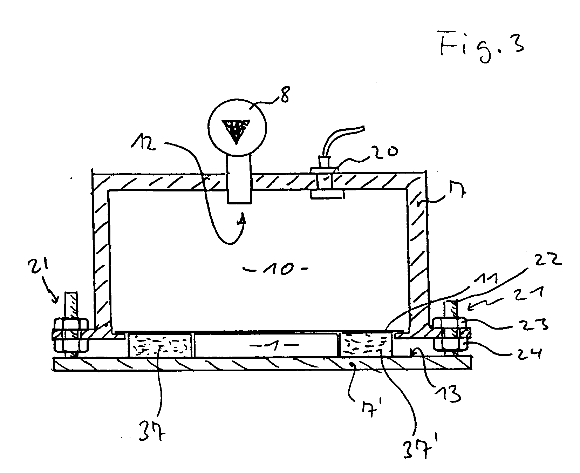

Bei einer weiteren bevorzugten Ausführungsform, die in Fig. 3 gezeigt ist, sind die Gelenkverbindung 15 und der Rasthaken 14 durch Haltemittel 21 ersetzt, die Gewindebolzen 22 umfassen, welche an dem Boden 7' befestigt sind und durch Bohrungen in nach außen ragenden Flansch-Rändern der Haube 7 (mit Spiel) ragen. Um die Haube 7 gegenüber dem Boden 13 in einem definierten Abstand zu halten, sind auf beiden Seiten des Flansches der Haube 7 Muttern 23 bzw. 24 auf die Bolzen 21 aufgeschraubt. Durch diese Anordnung ist gewährleistet, daß man die Haube 7 und damit auch die an ihr befestigte Membran 11 exakt so hoch über der Gegenfläche 13 halten kann, daß die Membran 11 bei eingeschobener Meßaufnehmeranordnung 1 im wesentlichen glatt verläuft. Weiterhin wird vorzugsweise der Flächenteil der Membran 11, der nicht über der Meßaufnehmeranordnung 1 liegt, mit Distanzelementen 37' ausgefüllt, die eine der Meßaufnehmeranordnung 1 entsprechende Dicke haben. Wenn nun der Druckraum 10 unter Druck gesetzt wird, so können nur an den verbleibenden Spalten Ausbeulungen der Membran 11 auftreten, so daß diese relativ dünn und damit elastisch ausgebildet werden kann. Darüber hinaus ist die so ausgebildete Vorrichtung auf verschieden dicke Meßaufnehmeranordnungen 1 einstellbar. Wenn man eine Meßaufnehmeranordnung 1 bis zu Spitzen-Meßwerten von 250 N/cm² kalibrieren will, so tritt bereits bei einer Fläche der Membran 11 von 30 cm x 40 cm eine Gesamtkraft auf, die bei 930.000 N liegt. Aus diesem Grunde ist es von Vorteil, wenn man eine große Vielzahl derartiger Haltevorrichtungen 21 vorsieht.

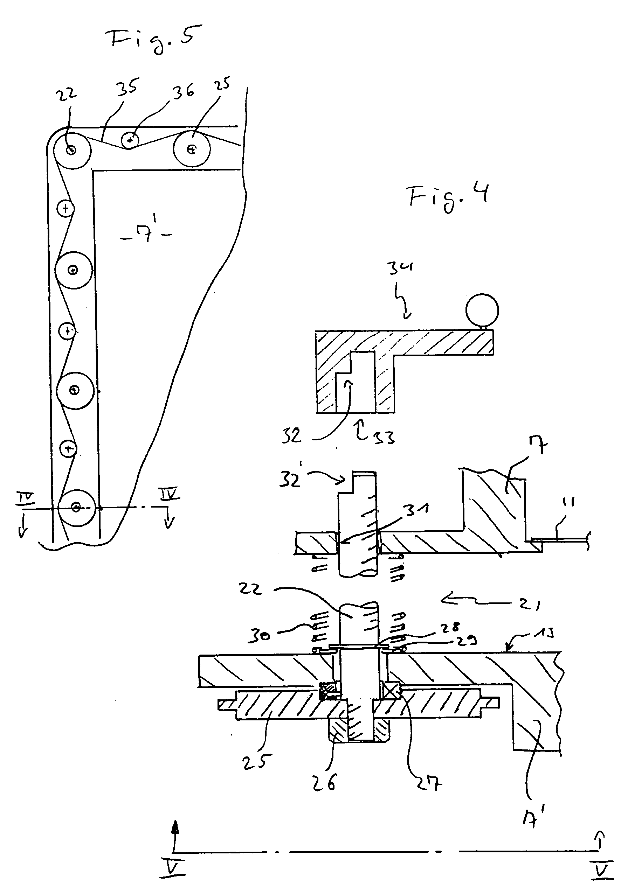

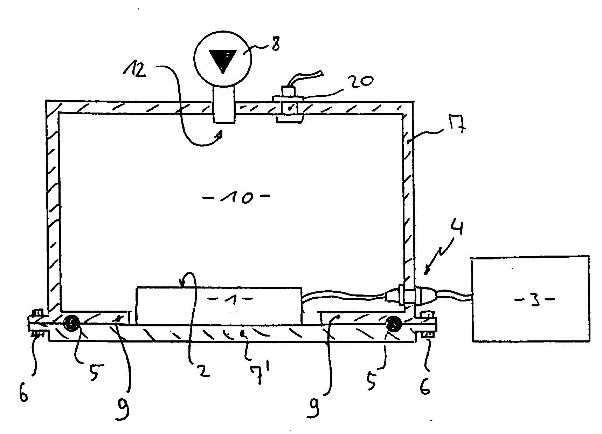

Bei einer bevorzugten Ausführungsform, die in den Fig. 4 und 5 schematisiert dargestellt ist, umfaßt die Haltevorrichtung 21 eine Vielzahl von Gewindebolzen 21, die am Rand des Bodens 7' drehbar aber in Längsrichtung fixiert befestigt sind. Diese Befestigung geschieht einerseits durch Axial-Pendelrollenlager 27, andererseits durch Sprengringe 28, die über Beilegscheiben 29 auf der Grundfläche 13 des Bodens 7' aufliegen. Die Axiallager 27 sind hierbei zug-seitig angeordnet, so daß die hohen Kräfte beim Kalibrieren (wenn der Druckraum unter Druck steht) über diese Lager aufgefangen werden. Die Gewindebolzen 22 sitzen in entsprechenden Innengewinden 31 im nach außen ragenden Flansch der Haube 7, wobei die Haube 7 gegenüber dem Boden 7' über Federn 30 abgestützt wird. Durch diese Federn 30 ist gewährleistet, daß die beim Drehen der Bolzen 22 auftretenden Reibungskräfte fast ausschließlich durch die Reibung im Innengewinde 31 bestimmt werden.

Die Vielzahl von Gewindebolzen 25 weisen an ihrem unteren Ende (in Fig. 4) jeweils aufgespannte Kettenräder 25 auf, die auf den Gewindebolzen 22 über Muttern 26 festgesetzt sind. Über diese Kettenräder 25 läuft eine (einzige) Kette 35 ringsum den Rand des Bodens 7', die über Umlenk- oder Spann-Kettenräder 36 mit den Kettenrädern 25 in Eingriff gehalten wird. Dreht man nun einen der Gewindebolzen 22, z.B. über eine Handkurbel 34, die eine Aufstecköffnung 33 mit angeformtem Ansatz 32 entsprechend einem Einschitt 32' im Gewindebolzen 22 aufweist, so wird diese Drehung auf alle Gewindebolzen 22 übertragen, so daß ein gleichmäßiges Heben und Senken der Haube 7 gegenüber dem Boden 7' ermöglicht wird. Hierdurch ist es möglich, eine besonders leichte und zusätzlich auch besonders gleichmäßige Verspannung zwischen der Haube 7 und dem Boden 7' zu erzielen, was in Anbetracht der auftretenden hohen Kräfte besonders wichtig ist. Statt einer Handkurbel 34 sind selbstverständlich auch motorische Antriebsmittel für die Kette 35 möglich.

Bei einer anderen, hier nicht gezeigten bevorzugten Ausführungsform der Erfindung umfassen die Haltemittel 21 Hydraulikzylinder, die von einer gemeinsamen Druckquelle gespeist werden. Durch diese Verbindung mit einer gemeinsamen Druckquelle ist eine gleichzeitige Betätigung der Hydraulikzylinder, also eine Kopplung aller Druckzylinder untereinander sichergestellt.

Bei einer hier nicht gezeigten weiteren bevorzugten Ausführungsform der Erfindung ist die Auswerteinrichtung 3 mit entsprechenden Mitteln (Mikroprozessor) ausgestattet und mit einem Ventil zwischen der Druckquelle 8 und der Öffnung 12 in steuernder Verbindung. Weiterhin ist der Mikroprozessor der Auswerteinrichtung 3 derart ausgebildet, daß das Ventil so gesteuert wird, daß der im Druckraum 10 erzeugte Druck entsprechend einem Eichprogramm eingestellt wird. Selbstverständlich ist es auch möglich, die Pumpe 8 zunächst einen Maximaldruck im Druckraum 10 erzeugen zu lassen, dann die Öffnung 12 (z.B. über ein Rückschlagventil) zu schließen und über ein (nicht gezeigtes), von der Auswerteinrichtung 3 gesteuertes Ventil den Druck entsprechend den gewünschten Kalibrierwerten in die Atmosphäre abzulassen.

Bei einer besonders bevorzugten Ausführungsform der Erfindung erfolgt eine Eichung sowohl mit steigenden, als auch zusätzlich mit fallenden Druckwerten, so daß ein (gegebenenfalls vorliegendes) Hystereseverhalten der Sensoren gespeichert und bei späteren Messungen berücksichtigt werden kann. Weiterhin ist es besonders bevorzugt, den von der Druckquelle 8 erzeugten Druck mit einem Druckfühler abzutasten und der Auswerteinrichtung 3 mitzuteilen, so daß die Auswerteinrichtung 3 entweder ein Magnetventil zur Konstanthaltung definierter Druckwerte steuern oder bei Erreichen eines definierten Druckwertes den Eichvorgang sampeln kann. Bei Erreichen dieses bestimmten Druckwertes fragt dann die Auswerteinrichtung 3 alle Sensoren ab, übernimmt die momentanen Meßwerte als Eichwerte und speichert sie in Form von Punkten eines Kennlinienfeldes ab. Danach wird der Druck auf den nächsten Eichwert gebracht.

Bei allen vorgenannten Ausführungsformen der Erfindung ist es also wesentlich, daß die erzeugten Kraftwerte von der Auswerteinrichtung 3 gesteuert werden.

## Patentansprüche

1. Kalibrierverfahren für eine Meßaufnehmeranordnung mit nachgeschalteter Auswerteinrichtung zur Messung der Kraft-/Druckverteilung über eine mit Sensoren, z.B. Einzelsensoren, versehene Fläche,
**dadurch gekennzeichnet,** daß
die Ausgangssignale bzw. -amplituden aller Sensoren in unbelastetem Zustand gemessen und aufgezeichnet werden,
die gesamte Meßaufnehmeranordnung mindestens teilweise in ein fluides Medium, z.B. Luft, Flüssigkeit, gebracht wird, dessen Druck über dem Atmosphärendruck liegt, und daß die Ausgangssignale der Sensoren sowie der Druck des fluiden Mediums gemessen und aufgezeichnet werden,
die Proportionalitätsfaktoren und Nullpunkte aller Sensoren aus den Meßdaten bestimmt und in der Auswerteinrichtung gespeichert werden, und daß
bei allen folgenden Messungen die Sensorausgangssignale nach Verschiebung um die gemessenen Nullpunktwerte mit den betreffenden gespeicherten Proportionalitätsfaktoren multipliziert werden.

2. Kalibrierverfahren nach Anspruch 1,
**dadurch gekennzeichnet,**
daß der über dem Atmosphärendruck liegende Druck von der Auswerteinrichtung gesteuert wird.

3. Kalibrierverfahren nach Anspruch 2,
**dadurch gekennzeichnet,**
daß der über dem Atmosphärendruck liegende Druck über einen Meßwertaufnehmer von der Auswerteinrichtung überwacht wird.

4. Vorrichtung zur Durchführung eines Kalibrierverfahrens für eine Meßaufnehmeranordnung mit einer der Meßaufnehmeranordnung nachgeschalteten Auswerteinrichtung zur Messung der Kraft-/Druckverteilung über eine mit Sensoren, z.B. Einzelsensoren versehene Fläche,
**dadurch gekennzeichnet,** daß ein Druckraum (10) vorgesehen ist, der gegenüber der Atmosphäre dicht abschließbar und mit einer Befüllungsöffnung (12) und einem Druckmeßfühler (20) versehen und derart ausgebildet ist, daß die Meßaufnehmeranordnung (1) mit dem Druck im Druckraum (10) beaufschlagt werden kann, und daß die Auswerteinrichtung Speichereinrichtungen aufweist, um Proportionalitätsfaktoren und Nullpunkte aller Sensoren zu speichern und bei nachfolgenden Messungen zu berücksichtigen.

5. Vorrichtung nach Anspruch 4,
**dadurch gekennzeichnet,** daß der Druckraum (10) auf einer Seite durch eine Membran (11) abgeschlossen und gegenüber einer Grundfläche (13) eines Bodens (7') fixierbar ist.

6. Vorrichtung nach Anspruch 5,
**dadurch gekennzeichnet,** daß der Druckraum (10) in einer Haube (7) ausgebildet ist, die an einer Seite durch die Membran (11) abgeschlossen ist und mit dieser Seite gegenüber dem Boden (7') über einstellbare Haltemittel in einem vorgebbaren Abstand fixierbar ist.

7. Vorrichtung nach Anspruch 6,
**dadurch gekennzeichnet,** daß eine Vielzahl von Haltemitteln (21) zwischen der Haube (7) und dem Boden (7') zur Verteilung der auftretenden Kräfte vorgesehen ist, die über Verbindungsmittel (25, 35) miteinander zur gleichzeitigen Einstellung gekoppelt sind.

8. Vorrichtung nach einem der Ansprüche 4 bis 7,
**dadurch gekennzeichnet,** daß die Speichereinrichtungen in der Auswerteinrichtung (3) derart ausgebildet sind, daß Kennlinien aller Sensoren speicherbar und zum Linearisieren aktueller Sensorausgangssignale abrufbar sind.

9. Vorrichtung nach einem der Ansprüche 4 bis 8,
**dadurch gekennzeichnet,** daß die Auswerteinrichtung (3) derart ausgebildet und mit dem Druckmeßfühler (20) verbunden ist, daß die Ausgangswerte der Meßaufnehmeranordnung von der Auswerteinrichtung (3) den gemessenen Druckwerten selbsttätig zugeordnet werden.

10. Vorrichtung nach einem der Ansprüche 4 bis 9,
**dadurch gekennzeichnet,** daß die Auswerteinrichtung (3) mit einem ferneinstellbaren Ventil in steuernder Verbindung steht, das zwischen der Befüllungsöffnung (12) und einer Druckquelle angeordnet ist, und daß die Auswerteinrichtung (3) derart ausgebildet ist, daß der Druck im Druckraum (10) über das Ventil selbsttätig einstellbar ist.

## Claims

1. A calibration process for a sensor arrangement with a following analysis device for measuring the force/pressure distribution over a surface provided with sensors, e.g. individual sensors,
characterised in that
the output signals and amplitudes of all the sensors are measured and recorded in the unloaded state,
the entire sensor arrangement is at least partially introduced into a fluid medium, e.g. air, liquid, the pressure of which is greater than the atmospheric pressure, and that the output signals of the sensors and the pressure of the fluid medium are measured and recorded,
the proportionality factors and zero points of all the sensors are determined from the measurement data and stored in the analysis device and that
in the case of all the following measurements the sensor output signals, having been displaced by the measured zero point values, are multiplied by the respective, stored proportionality factors.

2. A calibration process as claimed in Claim 1, characterised in that the pressure above the atmospheric pressure is controlled by the analysis device.

3. A calibration process as claimed in Claim 2, characterised in that the pressure above the atmospheric pressure is monitored via a sensor by the analysis device.

4. A device for the implementation of a calibration process for a sensor arrangement with an analysis device connected to the output end of the sensor arrangement for measuring the force/pressure distribution over a surface provided with sensors, e.g. individual sensors, characterised in that a pressure chamber (10) is provided which can be tightly sealed in relation to the atmosphere and is provided with a filling opening (12) and a pressure sensor (20) and is constructed in such manner that the sensor arrangement (1) can be acted upon by the pressure in the pressure chamber (10), and that the analysis device comprises storage devices in order to store proportionality factors and zero points of all the sensors and to take these into consideration in following measurements.

5. A device as claimed in Claim 4, characterised in that the pressure chamber (10) is sealed by a membrane (11) on one side and can be fixed in relation to a surface (13) of a base (7').

6. A device as claimed in Claim 5, characterised in that the pressure chamber (10) is constructed in a dome (7) which on one side is sealed by the membrane (11) and on this side can be fixed at a predeterminable distance in relation to the base (7') via adjustable retention means.

7. A device as claimed in Claim 6, characterised in that a plurality of retention means (21) are provided between the dome (7) and the base (7') for the distribution of the occurring forces, which retention means are coupled to one another via connecting means (25, 35) for simultaneous adjustment.

8. A device as claimed in one of Claims 4 to 7, characterised in that the storage devices in the analysis device (3) are designed such that characteristic curves of all the sensors can be stored and can be called up for the linearisation of actual sensor output signals.

9. A device as claimed in one of Claims 4 to 8, characterised in that the analysis device (3) is designed and connected to the pressure sensor (20) in such manner that the output values of the sensor arrangement are automatically allocated to the measured pressure values by the analysis device (3).

10. A device as claimed in one of Claims 4 to 9, characterised in that the analysis device (3) is connected in controlling fashion to a remote-adjustable valve which is arranged between the filling opening (12) and a pressure source, and that the analysis device (3) is designed in such manner that the pressure in the pressure chamber (10) can be automatically adjusted via the valve.

## Revendications

1. Procédé de calibrage d'un appareil capteur de mesure avec un dispositif d'exploitation monté en aval pour la mesure de la distribution de forces ou pressions sur une surface pourvue de capteurs, par exemple de capteurs séparés, caractérisé par le fait que les signaux ou amplitudes de sortie de tous les capteurs sont mesurés et enregistrés à l'état non chargé, l'appareil capteur de mesure entier est placé au moins en partie dans un fluide, par exemple air, liquide, dont la pression est supérieure à la pression atmosphérique, et les signaux de sortie des capteurs et la pression du fluide sont mesurés et enregistrés, les facteurs de proportionnalité et les zéros de tous les capteurs sont déterminés à partir de données de mesure et mis en mémoire dans le dispositif d'exploitation, et lors de toutes les mesures suivantes, les signaux de sortie des capteurs sont, après décalage des valeurs à zéro mesurées, multipliés par les facteurs de proportionnalité mis en mémoire correspondants.

2. Procédé de calibrage selon la revendication 1, caractérisé par le fait que la pression supérieure à la pression atmosphérique est commandée par le dispositif d'exploitation.

3. Procédé de calibrage selon la revendication 2, caractérisé par le fait que la pression supérieure à la pression atmosphérique est contrôlée par le dispositif d'exploitation par l'intermédiaire d'un capteur de valeur mesurée.

4. Dispositif pour la mise en oeuvre d'un procédé de calibrage d'un appareil capteur de mesure avec un dispositif d'exploitation monté en aval de cet appareil capteur pour la mesure de la distribution de forces ou pressions sur une surface pourvue de capteurs, par exemple de capteurs séparés, caractérisé par le fait qu'il est prévu un espace à pression (10) qui peut être isolé de l'atmosphère, est pourvu d'un orifice de remplissage (12) et d'un capteur de mesure de pression (20) et est construit de façon telle que l'appareil capteur de mesure (1) peut être soumis à la pression dans cet espace à pression (10), et que le dispositif d'exploitation présente des mémoires pour mémoriser des facteurs de proportionnalité et des zéros de tous les capteurs et les prendre en considération lors des mesures suivantes.

5. Dispositif selon la revendication 4, caractérisé par le fait que l'espace à pression (10) est fermé sur un côté par une membrane (11) et peut être fixé vis-à-vis d'une face de base (13) d'un fond (7').

6. Dispositif selon la revendication 5, caractérisé par le fait que l'espace à pression (10) est formé dans une hotte (7) qui est fermée sur un côté par la membrane (11) et peut être fixée par ce côté vis-à-vis du fond (7'), à une distance donnée, par des moyens de fixation réglables.

7. Dispositif selon la revendication 6, caractérisé par le fait qu'un grand nombre de moyens de fixation (21) sont prévus entre la hotte (7) et le fond (7') pour la répartition des forces qui apparaissent et sont couplés entre eux par des moyens de liaison (25, 35) pour leur réglage simultané.

8. Dispositif selon l'une des revendications 4 à 7, caractérisé par le fait que les mémoires du dispositif d'exploitation (3) sont construites de façon telle que des courbes caractéristiques de tous les capteurs puissent être mises en mémoire et être appelées pour la linéarisation des signaux de sortie actuels des capteurs.

9. Dispositif selon l'une des revendications 4 à 8, caractérisé par le fait que le dispositif d'exploitation (3) est construit et relié au capteur de mesure de pression (20) de façon telle qu'il associe automatiquement les valeurs de sortie de l'appareil capteur de mesure aux valeurs de pression mesurées.

10. Dispositif selon l'une des revendications 4 à 9, caractérisé par le fait que le dispositif d'exploitation (3) est en liaison de commande avec une vanne réglable à distance placée entre l'orifice de remplissage (12) et une source de pression, et qu'il est construit de façon telle que la pression dans l'espace à pression (10) peut être réglée automatiquement par l'intermédiaire de la vanne.
